# EUROPÄISCHE PATENTSCHRIFT

(11) **EP 2 556 735 B1**
(45) Veröffentlichungstag und Bekanntmachung des Hinweises auf die Patenterteilung: **10.10.2018**
(21) Anmeldenummer: 11006608.1
(22) Anmeldetag: 11.08.2011
(51) Int. Cl.: A01B 49/02, A01B 63/114

(54) **Bodenbearbeitungsgerät mit Vorrichtung zur Einhaltung eines Schlupfgrenzwertes bei konstanter Arbeitstiefe**
Soil cultivation device with device for maintaining a slippage threshold at constant working depth
Appareil de traitement de sol doté d'un dispositif pour maintienir un seuil de glissement à une profondeur de travail constante

(43) Veröffentlichungstag der Anmeldung: 13.02.2013
(73) Patentinhaber: Lemken GmbH & Co. KG, 46519 Alpen (DE)
(72) Erfinder: Gebbeken, Martin, Dipl.-Ing., 46519 Alpen (DE); Werries, Dieter, 46519 Alpen (DE); Paessens, Christian, 47661 Issum (DE); Lukas, Thomas, 48683 Ahaus-Wüllen (DE); Berendsen, Mark, 7044 AJ Lengel (NL); Geraats, Marcel, 41334 Nettetal (DE)
(74) Vertreter: Schulte & Schulte

(56) Entgegenhaltungen:
- EP-A1- 2 363 013
- WO-A1-03/086842
- FR-A1- 2 533 409

## Beschreibung

Die Erfindung betrifft ein Bodenbearbeitungsgerät oder eine Bestellkombination gemäß dem Patentanspruch 1. Ein derartiges Bodenbearbeitungsgerät ist der deutschen Patentschrift DE 30 09 589 zu entnehmen. Bei diesem Bodenbearbeitungsgerät wird zur Schlupfvermeidung bzw. Schlupfreduzierung der Walze die Umdrehungsgeschwindigkeit der Walze der Arbeitsgeschwindigkeit angepasst, indem die Walze durch einen Hydraulikmotor angetrieben wird. Diese Art der Schlupfreduzierung bzw. Schlupfvermeldung der Walze und Rückverfestigung des durch ein Bodenbearbeitungsgerät bearbeiteten Bodens hat sich als sehr energieintensiv und aufwändig erwiesen
Weitere Bodenbeartungsgeräte sind offenbart in WO 03/086842 A1 und der nachveröffentlichen EP 2 363 013 A1.

Aufgabe der Erfindung ist es, ein Bodenbearbeitungsgerät mit Walze zu schaffen, bei dem unter Ausnutzung vorhandener Einrichtungen der Schlupf der Walze innerhalb vorgebbarer Grenzen begrenzt werden kann.

Die Aufgabe der Erfindung wird mit den aufgeführten Merkmalen des Patentanspruchs 1 gelöst. Durch die Ermittlung der Umdrehungsgeschwindigkeit der Walze und der tatsächlichen Arbeitsgeschwindigkeit des Bodenbearbeitungsgerätes stehen die Werte zur Verfügung, die dazu genutzt werden können, den Schlupf der Walze zu bestimmen. Bei Überschreitung eines vorgegebenen Schlupfgrenzwertes können über ein Stellteil automatisiert und geregelt Parameter am Bodenbearbeitungsgerät und/oder am Traktor so verändert werden, dass die Walze den Boden optimal bearbeitet, ohne dass dabei ein zu großer Schlupf der Walze auftritt. Die Umdrehungsgeschwindigkeit der Walze kann hier zum Beispiel über einen Sensor an der Walzenachse erfasst werden. Zur Erfassung der Arbeitsgeschwindigkeit kann das Anbaugerät mit einer Vorrichtung in Form eines Impulsrades ausgerüstet sein, das wegabhängig die Regeleinrichtung für die Begrenzung des Schlupfes der Walze mit den entsprechenden Informationen versorgt. Denkbar sind auch GPS-Empfänger oder ein Radarsensor am Anbaugerät oder Traktor, mit denen die Arbeitsgeschwindigkeit ebenfalls erfasst werden kann.

Eine bevorzugte Ausführung der Erfindung sieht dabei vor, dass das Stellteil dem Dreipunktturm zugeordnet ist, wobei über das Stellteil der Anlenkpunkt des Oberlenkers am Dreipunktturm bei Überschreitung des vorgegebenen Schlupfgrenzwertes so verlagert wird, dass die Druckbelastung der Walze auf den Boden so reduziert wird, dass der vorgegebene Schlupfgrenzwert nicht überschritten wird. Bei Überschreitung des Schlupfgrenzwertes wird über das als Stellantrieb ausgebildete Stellteil der Anlenkpunkt des Oberlenkers und damit die Lage des Oberlenkers so verändert, dass der Druck der Walze auf dem Boden reduziert wird. Dadurch reduziert sich die Höhe des Bodenwalls vor der Walze oder die Einsinktiefe der Walze in den Boden derart, dass die Walze wieder ausreichend durch den Boden angetrieben wird und die vorgegebenen Schlupfgrenzwerte nicht überschritten werden. Erfindungsgemäß ist ein gesonderter Antrieb mit entsprechendem Energiebedarf für die Walze nicht vorgesehen. Dabei wird vorausgesetzt, dass sich die Hubhydraulik des Traktors in der Schaltstellung "Schwimmstellung" befindet oder auf "Mischregelung" geschaltet ist. In diesen Schaltstellungen bewirkt ein steil stehender und zum Dreipunkturm des Bodenbearbeitungsgerätes stark ansteigender Oberlenker eine große Druckentlastung der Walze und ein zum Dreipunkturm des Bodenbearbeitungsgerätes nur leicht ansteigender Oberlenker nur eine geringe Druckentlastung der Walze.

Eine besonders bevorzugte Ausführung der Erfindung sieht vor, dass das Stellteil der Hubhydraulik des Traktors zugeordnet ist und die Regeleinrichtung der traktorseitigen Hubhydraulik und eine Regeleinrichtung des Anbaugerätes zum Beispiel über ein ISOBUS-System so miteinander kommunizieren, dass bei Überschreitung des vorgegebenen Schlupfgrenzwertes das Stellteil der Hubhydraulik so angesteuert wird, dass die Druckbelastung der Walze auf den Boden entsprechend reduziert wird. In den allermeisten Fällen ist nämlich eine zu hohe Druckbelastung der Walze auf den Boden die Ursache dafür, dass ein zu hoher Schlupf der Walze auftritt. Ober das ISOBUS-System oder ein vergleichbares BUS-System erfolgt ein Datenaustausch mit angepassten Einstellungen, die für einen optimalen Lauf der Walze sorgen, ohne die Arbeitstiefe des Bodenbearbeitungsgerätes reduzieren zu müssen ohne dass dafür der Einsatz eines gesonderten Walzenantriebs mit entsprechend hohem Energiebedarf notwendig wäre. Über ein Traktor-Gerätemanagement steuert das Anbaugerät praktisch alle Funktionen des Traktors, die für einen optimalen Betrieb des Anbaugerätes relevant sind.

Weitere Einzelheiten und Vorteile des Erfindungsgegenstandes ergeben sich aus der nachfolgenden Beschreibung und der zugehörigen Zeichnung.

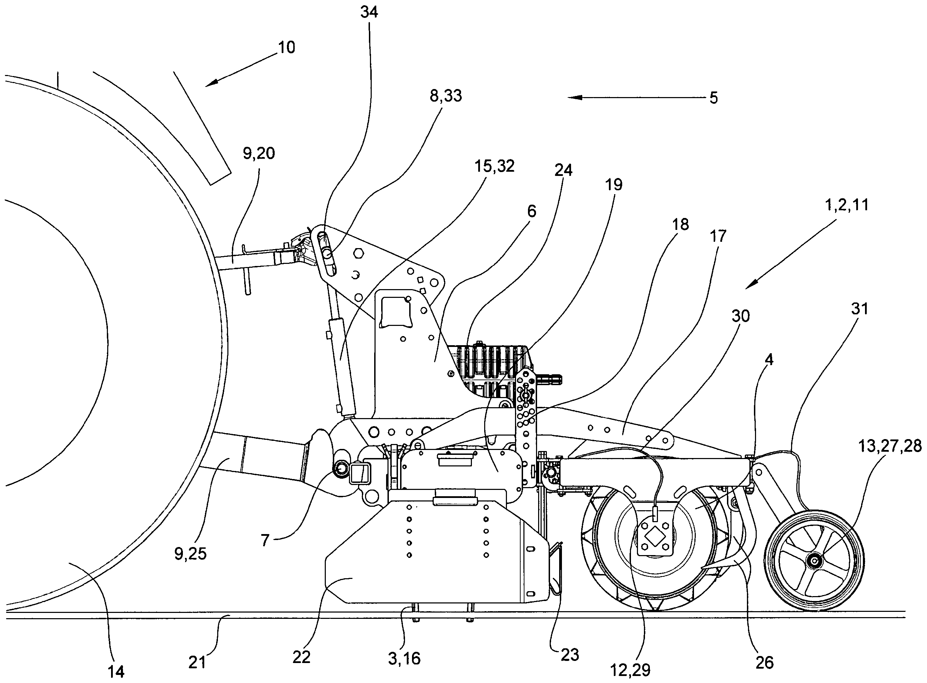

Die Figur zeigt eine Kreiselegge 11 als Bodenbearbeitungsgerät 1 bzw. als Anbaugerät 2, die über den Dreipunktturm 6 und die Anlenkpunkte 7 und 8 mit dem Oberlenker 20 und den Unterlenkem 25 des Dreipunktgestänges 9 des Traktors 10 verbunden ist. Das Dreipunktgestänge 9 wird überwiegend durch das linke Hinterrad 14 des Traktors 10 verdeckt. Die Kreiselegge 11 weist Zinken 16 als Bodenbearbeitungswerkzeuge 3 auf. Über die Tragarme 17 und über die Stelleinrichtung 18 ist die Walze 4 unter anderem mit der Getriebewanne 19 der Kreiselegge 11 verbunden. Die Arbeitstiefe der Zinken 16 der Kreiselegge 11 kann über die Stelleinrichtung 18 verändert werden. Die Zinken 16 sind nur zum Teil sichtbar; sie werden überwiegend durch das Seitenschild 22 verdeckt. In Arbeitsrichtung hinter den Zinken 16 und vor der Walze 4 ist eine Planierschiene 23 angeordnet, die die Arbeitsintensität der Zinken 16 unterstützen soll. Auf der Getriebewanne 19 ist das Schaltgetriebe 24 angeordnet. Die Walze 4 weist die Abstreifer 26 auf, die ein Festsetzten von Bodenpartikeln an der Walze 4 verhindern sollen. Hinter der Walze 4 ist eine Vorrichtung 13 angeordnet, Über die die Arbeitsgeschwindigkeit des Bodenbearbeitungsgerätes 1 ermittelt wird. Diese Vorrichtung 13 ist hier als ein Impulsrad 27 mit Sensor 28 ausgebildet, das in vertikaler Richtung schwenkbar mit der Walze 4 verbunden ist Über den Sensor 28 wird die Arbeitsgeschwindigkeit der Kreiselegge 11 praktisch schlupffrei erfasst. Ein weiterer Sensor 29 befindet sich an der Vorrichtung 12 der Walze 4 und dient zur Erfassung der Drehgeschwindigkeit der Walze 4. Über die Kabel 30 und 31 werden die erfassten Daten an eine nicht dargestellte Regeleinrichtung übermittelt. Wird ein übergroßer Schlupf der Walze 4 festgestellt, wird über die Regeleinrichtung das Stellteil 15 betätigt, wodurch die Lage des Oberlenkers 20 so verändert wird, dass die Walze 4 einen vorgegebenen Schlupfgrenzwert nicht mehr überschreitet. Das Stellteil 15 ist hier als Hydraulikzylinder 32 ausgebildet, der oben mit dem verschiebbaren Anlenkpunkt 8 und unten schwenkbar mit dem Dreipunktturm 6 verbunden ist. Das Stellteil 15 verändert dabei die Lage des Oberlenkers 20 derart, dass die Druckbelastung auf die Walze 4 und damit der Schlupf der Walze entsprechend reduziert wird. Das Stellteil 15 verschiebt dabei den als Anlenkpunkt 8 dienenden Bolzen 33 des Oberlenkers 20 in einem Langloch 34 so weit nach oben, bis die Druckbelastung der Walze 4 und dadurch der Schlupf ausreichend reduziert wurde. Das Langloch 34 ist hier gerade und relativ kurz dargestellt. Bevorzugt wird ein kreisbogenförmiges Langloch 34, das deutlich länger ist als dargestellt und dessen gedachter Kreismittelpunkt sich im Bereich des Anlenkpunktes des Oberlenkers 20 am Traktor 10 befindet. Damit die Walze 4 nicht zu schwerzügig wird und den Boden optimal bearbeitet, wird der Oberlenker 20 in seiner Lage so weit kontrolliert verändert, dass der Schlupf der Walze 4 einen vorgegebenen Grenzwert nicht überschreitet. Der Oberlenker 20 steigt hier leicht zum Dreipunktturm 6 hin an, was einer hohen Druckbelastung der Walze 4 auf den Boden 21 entspricht. Tritt ein zu großer Schlupf auf, wird über das Stellteil 15 der Anlenkpunkt 8 so verschoben, dass der Oberlenker 20 steiler zum Dreipunktturm 6 ansteigt. Die Druckbelastung der Walze 4 auf den Boden 21 wird dadurch reduziert und der Bodenantrieb der Walze 4 verbessert.

## Patentansprüche

1. Als Bodenbearbeitungsgerät (1) oder Bestellkombination ausgebildetes Anbaugerät (2) mit Bodenbearbeitungswerkzeugen (3) und mindestens einer nicht gesondert angetriebenen Walze (4), die in Arbeitsrichtung (5) hinter den Bodenbearbeitungswerkzeugen (3) angeordnet ist und mit einem Dreipunktturm (6) mit Anlenkpunkten (7, 8) für die Verbindung des Anbaugerätes (2) mit dem Dreipunktgestänge (9) eines Traktors (10), wobei Mittel vorgesehen sind, über die der Schlupf der Walze (4) während des Einsatzes des Anbaugerätes (2) beeinflussbar ist, wobei das Anbaugerät (2) mit einer Vorrichtung (12) zur Ermittlung der Umdrehungsgeschwindigkeit der nicht gesondert angetriebenen Walze (4) ausgerüstet ist, eine zusätzliche Vorrichtung (13) zur Ermittlung der tatsächlichen Arbeitsgeschwindigkeit des Anbaugerätes (2) vorgesehen ist und das Anbaugerät (2) als Mittel mindestens ein Stellteil (15) zur Reduzierung des Schlupfes der Walze (4) bei zumindest annähernd konstanter Arbeitstiefe aufweist, das dann automatisch aktiviert wird, sobald ein vorgegebener Schlupfgrenzwert zwischen der Umdrehungsgeschwindigkeit der Walze (4) und der Arbeitsgeschwindigkeit des Anbaugerätes (2) überschritten ist.

2. Bodenbearbeitungsgerät nach Anspruch 1,
**dadurch gekennzeichnet,**
**dass** das Stellteil (15) dem Dreipunktturm (6) zugeordnet, wobei über das Stellteil (15) der Anlenkpunkt (8) des Oberlenkers (20) am Dreipunktturm (6) bei Überschreitung des vorgegebenen Schlupfgrenzwertes so verlagert wird, dass die Druckbelastung der Walze (4) auf den Boden (21) so reduziert wird, dass der vorgegebene Schlupfgrenzwert nicht überschritten wird.

3. Bodenbearbeitungsgerät nach Anspruch 1,
**dadurch gekennzeichnet,**
**dass** das Stellteil (15) der Hubhydraulik des Traktors (10) zugeordnet ist und die Regeleinrichtung der traktorseitigen Hubhydraulik und eine Regeleinrichtung des Anbaugerätes über ein ISOBUS-System so miteinander kommunizieren, dass bei Überschreitung des vorgegebenen Schlupfgrenzwertes das Stellteil (15) der Hubhydraulik so angesteuert wird, dass die Druckbelastung der Walze (4) auf den Boden (21) entsprechend reduziert bzw. verändert wird.

## Claims

1. Mounted implement (2) designed as soil tillage implement (1) or tillage combination comprising soil tillage tools (3) and at least one roller (4) which is not driven separately and which is arranged behind the soil tillage tools (3) in the working direction (5) and comprising a three-point tower (6) with attachment points (7, 8) for connecting the implement (2) to the three-point linkage (9) of a tractor (10), whereby means are provided to influence the slip of the roller (4) during the use of the implement (2),
wherein the implement (2) is equipped with a device (12) for determining the rotational speed of the not separately driven roller (4), an additional device (13) for determining the actual working speed of the implement (2) is provided and the implement (2) as means has at least one control element (15) for reducing the slip of the roller (4) at at least approximately constant working depth, which is automatically activated, when a predetermined slip limit value between the rotational speed of the roller (4) and the working speed of the implement (2) is exceeded.

2. Soil tillage implement according to claim 1,
**characterized in that**,
that the control element (15) is associated with the three-point tower (6), the pivot point (8) of the upper link (20) on the three-point tower (6) being displaced via the control element (15) when the predetermined slip limit value is exceeded in such a way that the pressure load of the roller (4) on the ground (21) is reduced so that the predetermined slip limit value is not exceeded.

3. Soil tillage implement according to claim 1,
**characterized in that**,
that the control element (15) is assigned to the lifting hydraulics of the tractor (10) and the control device of the lifting hydraulics on the tractor side and a control device of the attachment communicate with one another via an ISOBUS system such that when the predetermined slip limit value is exceeded the control element (15) of the lifting hydraulics is controlled such that the pressure load of the roller (4) on the ground (21) is reduced or changed correspondingly.

## Revendications

1. Machine portée (2) conçu comme outil de préparation du sol (1) ou combinaison de labourage avec des outils de préparation du sol (3) et au moins un rouleau (4) qui n'est pas entraîné séparément et qui est disposé derrière les outils de préparation du sol (3) dans la direction de travail (5) et avec une tour trois points (6) avec des points d'attache (7), 8) pour l'attelage de la machine (2) à l'attelage trois points (9) d'un tracteur (10), des moyens sont prévus par lesquels le glissement du rouleau (4) peut être influencé pendant l'utilisation de la machine portée (2), dans laquelle machine portée (2) est équipée d'un dispositif (12) pour déterminer la vitesse de rotation du rouleau (4) non entraîné séparément, un dispositif supplémentaire (13) pour déterminer la vitesse de travail réelle de la machine portée (2) est prévu et la machine portée (2) comportée comme moyen au moins un élément de commande (15) pour réduire le glissement du rouleau (4) à une profondeur de travail au moins approximativement constante, qui s'active automatiquement dès qu'une valeur limite de glissement prédéterminée entre la vitesse de rotation du rouleau (4) et la vitesse de travail de la machine portée (2) est dépassée.

2. Outil de préparation du sol selon la revendication 1, **caractérisé en ce que**,
l'élément de commande (15) est associé à la tour à trois points (6), le point de pivotement (8) du bras supérieur (20) sur la tour à trois points (6) étant déplacé par l'élément de commande (15) lorsque la valeur limite de glissement prédéterminée est dépassée de telle sorte que la charge de pression du rouleau (4) sur le sol (21) est réduite de telle sorte que la valeur limite de glissement prédéterminée n'est pas dépassée.

3. Outil de préparation du sol selon la revendication 1, **caractérisé en ce que**,
l'élément de commande (15) est affecté à l'hydraulique de levage du tracteur (10) et le dispositif de commande de l'hydraulique de levage à la côté tracteur et un dispositif de commande de l'accessoire communiquent entre eux via un système ISOBUS de telle sorte que, lorsque la valeur limite de glissement prédéterminée est dépassée, l'élément de commande (15) de l'hydraulique de levage est commandé de telle sorte que la charge de pression du rouleau (4) sur le sol (21) est réduite ou modifiée en conséquence.
